# EUROPEAN PATENT APPLICATION

(11) **EP 4 424 759 A1**
(43) Date of publication of application: **04.09.2024**
(21) Application number: 22886877.4
(22) Date of filing: 21.10.2022
(51) Int. Cl.: C08J 11/14, C08J 11/16, B09B 3/45

(54) **METHOD AND APPARATUS FOR DECOMPOSING FLUORINE ATOM-CONTAINING POLYMER**

(30) Priority: 29.10.2021 JP 2021177521
(71) Applicant: Kanagawa University, Yokohama-shi Kanagawa 221-8686 (JP)
(72) Inventor: HORI Hisao, Yokohama-shi, Kanagawa 221-8686 (JP)
(74) Representative: V.O.
(86) International application number: PCT/JP2022/039253
(87) International publication number: WO 2023/074550

(57) **Abstract**

Provided is a method of decomposing a polymer containing fluorine atoms that reduces the amount of solid residue requiring separation after treatment and enables the recovery of fluoride ions in high yield even at lower temperatures. The method of decomposing a polymer containing fluorine atoms involves the step of bringing the polymer containing fluorine atoms of interest contact with subcritical water at 200 °C or higher in the presence of at least one basic compound selected from the group consisting of alkali metal hydroxides and alkaline earth metal hydroxides, and performing this process in an oxygen-containing atmosphere. This method can readily decompose the polymer containing fluorine atoms into fluoride ions and carbon dioxide, and thus can be easily mineralized.

## Description

### Technical Field

The present invention relates to a method of decomposing a polymer containing fluorine atoms and an apparatus of decomposing a polymer containing fluorine atoms.

### Background Art

Polymers containing fluorine atoms are highly valued for their superior properties, such as high chemical stability and high heat resistance, and are used in various fields ranging from physical, chemical and medical instruments to various household goods. For example, polyvinylidene fluoride (PVDF), which is a polymer of vinylidene fluoride represented by the chemical formula H₂C=CF₂, is applied to products, such as pipes, sheets, and plates because of its high mechanical strength and high chemical and heat resistance. ETFE, which is a copolymer of tetrafluoroethylene and ethylene, is used in structural domes, for example, because of its resistance to ultraviolet rays and high transparency.

However, these polymers often have waste disposal problems as the flip side of such a high level of chemical stability and high heat resistance. In particular, incineration of these polymers not only requires treatment at high temperatures to decompose them due to the presence of carbon-fluorine bonds, the strongest covalent bond, but also causes decomposition of the incinerator material due to gaseous hydrogen fluoride generated by the incineration. This means that disposal of these polymers requires landfilling, which is also problematic in the current situation where landfills are running out of space to accept more waste. As a result, fluorinated polymers require a new waste management option that is neither incinerated nor landfilled.

Against such a background, for example, non-patent literature (NPL) 1 discloses a method of decomposing polymers containing fluorine atoms into carbon dioxide and fluoride ions through contact the polymers containing fluorine atoms with subcritical water in the presence of hydrogen peroxide. Such a method can not only mineralize polymers containing fluorine atoms under relatively mild conditions, but also yield calcium fluoride, which can be used as a raw material for a variety of fluorine-containing compounds, through a reaction of the fluoride ions produced in the treatment with calcium ions; hence, this method is excellent from the standpoint of resource recycling.

Patent literature (PTL) 1 also discloses a method of decomposing polymers containing fluorine atoms by treatment in subcritical water at 200 °C or higher in the presence of permanganate, an oxidizing agent. This method enables a significantly reduced amount of oxidant to be used compared to the case of treating polymers containing fluorine atoms with subcritical water using hydrogen peroxide as an oxidant.

PTL 2 also proposes a method of decomposing polymers containing fluorine atoms through treatment in subcritical water at a temperature of 200 °C or higher in the presence of a basic compound. This method allows polymers containing fluorine atoms to be decomposed to a state inferred to be black elemental carbon and the fluorine atoms contained in the polymers to be recovered as fluoride ions. PTL 2 also discloses that the yield of fluoride ions can be as high as 90% or higher at a temperature of subcritical water of 250 °C or higher under an argon gas atmosphere, in examples.

### Citation List

### Patent Literature

PTL 1 Japanese Patent Application Unexamined Publication No. 2018-104578
PTL 2 Japanese Patent Application Unexamined Publication No. 2021-155478 Nonpatent Literature

NPL 1 Hisao Hori et al., Ind. Eng. Chem. Res., 2015, 54, pp 8650-8658

### Summary of Invention

### Technical Problem

According to the invention described in PTL 2, polymers containing fluorine atoms can be mineralized safely without producing hazardous waste. However, as shown in paragraph 0019 of PTL 2 and examples, polymers containing fluorine atoms treated according to this invention cause the reaction solution after the treatment to contain a black solid residue that appears to be elemental carbon; therefore, the residue must be removed. In addition, the treatment requires high temperature conditions of 250 °C or 300 °C to increase the yield of fluoride ions to nearly 100%.

An object of the present invention, which was made in view of the above circumstances, is to provide a method of decomposing a polymer containing fluorine atoms which method can reduce the solid residue to be separated after treatment and can recover fluoride ions in high yield even at lower temperatures.

### Solution to Problem

As a result of extensive study to solve the problems described above, the inventor found that decomposition of a polymer containing fluorine atoms that is brought into contact with subcritical water in the presence of a basic compound in a reaction vessel filled with an oxygen atmosphere enables not only fluoride ions to be recovered in sufficiently high yield even at a low temperature of, for example, 200 °C, but also the carbon atoms contained in the polymer to be oxidized to carbon dioxide without formation of the black solid residue described to complete the present invention, like the invention described in PTL 2. Specifically, the present invention provides the following Aspects:

(1) The present invention provides a method of decomposing a polymer containing fluorine atoms, the method involves the step of bringing a polymer containing fluorine atoms of interest with subcritical water at 170 °C or higher in the presence of at least one basic compound selected from the group consisting of alkali metal hydroxides and alkaline earth metal hydroxides, wherein the step is performed in an atmosphere containing oxygen.
(2) The present invention also provides a method of decomposing a polymer containing fluorine atoms as described in Aspect (1), wherein the temperature of the subcritical water is 200 °C or higher.
(3) The present invention further provides a method of decomposing a polymer containing fluorine atoms as described in Aspect (1) or (2), wherein the basic compound is sodium hydroxide and/or potassium hydroxide.
(4) The present invention further provides an apparatus of decomposing a polymer containing fluorine atoms, the apparatus comprising a reaction vessel for bringing a polymer containing fluorine atoms of interest into contact with subcritical water at 170 °C or higher in an oxygen-containing atmosphere in the presence of at least one basic compound selected from the group consisting of alkali metal hydroxides and alkaline earth metal hydroxides.

### Advantageous Effect

The present invention provides a method of decomposing a polymer containing fluorine atoms which method reduces the amount of solid residue to be removed after treatment and enables the recovery of fluoride ions in high yield even at lower temperatures.

### Brief Description of Drawings

Figure 1 shows a plot of fluoride ion yield versus reaction temperature in inventive examples.
Figure 2 shows a plot of fluoride ion yield versus reaction temperature in comparative examples.

### Description of Embodiment

### <Method of decomposing polymer containing fluorine atoms>

An embodiment of the method of decomposing a polymer containing fluorine atoms and an embodiment of the apparatus of decomposing a polymer containing fluorine atoms in accordance with the present invention will now be described. It should be noted that the scope of the present invention is not limited in any way to the following embodiments and may be implemented with modifications as appropriate within the scope of the invention.

The method of decomposing a polymer containing fluorine atoms involves the step of bringing a polymer containing fluorine atoms of interest with subcritical water at 170 °C or higher in the presence of at least one basic compound selected from the group consisting of alkali metal hydroxides and alkaline earth metal hydroxides, wherein the step is performed in an atmosphere containing oxygen. This process is essential for achievement in the advantageous effect of the invention and thus is included in the scope of the invention. An additional step, e.g., a pretreatment step of breaking up the polymer containing fluorine atoms into small pieces may be employed to enhance the efficiency of the decomposition reaction. Such pretreatment, however, is not essential. Before pretreatment, it is desirable that the polymer containing fluorine atoms be pulverized into a small particle size until they are in powder form.

The polymer containing fluorine atoms of interest in the present invention is a polymer containing one or more fluorine atoms in its molecule, and may be subject to decomposition in the present invention if it contains even one fluorine atom in the molecule. Polymers containing fluorine atoms are appreciated for their high chemical resistance, heat resistance, weather resistance, and other properties, and are applied in various fields, including industry and medicine. On the other hand, these polymers often have waste disposal problems as the flip side of such chemical stability and high heat resistance. The present invention provides a method of chemically decomposing these polymers as waste. Such polymers containing fluorine atoms may be homopolymers or copolymers. Examples of such polymers include ethylene-tetrafluoroethylene copolymer (ETFE), polyvinylidene fluoride (PVDF), and polyvinyl fluoride (PVF).

In the present invention, polymers containing fluorine atoms are treated in subcritical water in the presence of a basic compound, whereat it is believed that the basic compound attracts hydrogen fluoride (HF) from the polymer to initiate decomposition of the polymer. According to this mechanism, decomposition by the present invention is considered to be difficult for hydrogen-free polymers, such as polytetrafluoroethylene (PTFE). Hydrogen-free polymers should be exempted from the application of the present invention. ETFE is known to be an alternate polymer of ethylene and tetrafluoroethylene, and thus necessarily contains hydrogen atoms adjacent to fluorine atoms. In conclusion, the present invention is also applicable to ETFE.

In the present invention, decomposition probably start with detachment of HF from the polymer as described above, and the polymer molecules after detachment of HF are eventually oxidized to carbon dioxide. As a result, black solid residue that appears to be elemental carbon barely forms, unlike the invention described in PTL 2. Although the reason for oxidation of the polymer molecules to carbon dioxide after detachment of HF is not necessarily clear, oxygen molecules present in the reaction system probably engage in the reaction. After the reaction is completed, the reaction solution contains fluoride ions derived from the fluorine atoms detached from the polymer and carbon dioxide in the form of carbonate ions derived from the carbon atoms, which fact demonstrates that the polymer is completely mineralized.

Subcritical water is pressurized water in a liquid state within a temperature range above 100 °C and below the critical temperature of 374 °C. Subcritical water has different properties in terms of physical properties from ordinary water below 100 °C. In particular, subcritical water within the range of 200 °C to 300 °C has a significantly reduced relative permittivity, lipophilicity substantially comparable to methanol or acetone at room temperature, and an ionic product on the order of 10⁻¹¹ mol/L, which is 10⁻¹⁴ mol/L at room temperature, indicating that the concentration of hydrogen and hydroxide ions is 30 times higher than that of water at room temperature. For this reason, it is known that subcritical water, especially at 200 °C to 300 °C, shows different reactivity than water at room temperature. In the present invention, subcritical water at above 170 °C, preferably above 200 °C is used.

Any water, such as tap water, ion-exchanged water, distilled water, and well water, may be used in the preparation of subcritical water without limitation. Ion-exchanged water and distilled water are preferred from the viewpoint of suppressed side reactions caused by salts present therein. The amount of water used should be just enough to sufficiently soak the polymer containing fluorine atoms of interest. It is to be noted that the closed pressure container should filled with a sufficient amount of water, else water supplied is fully vaporized to preclude transition into the state of subcritical water.

As already mentioned, the method of the present invention involves the step of bringing polymers containing fluorine atoms into contact with heated subcritical water in an atmosphere containing oxygen; hence, the yield of fluoride ions is higher than that in the invention described in PTL 2. One of the reasons for such higher yield of fluoride ions is that, unlike the invention described in PTL 2, the present invention substantially produces no black solid residue, probably elemental carbon. In the invention described in PTL 2, fluoride ions may be trapped into this solid residue after the reaction is completed. In this case, the fluoride ions dissolved in the reaction solution are reduced by the amount trapped into the solid residue. In contrast, in the present invention, the carbon atoms in the polymer are fully oxidized to carbon dioxide substantially without solid residue; hence, almost all fluoride ions are dissolved in the reaction solution.

In the present invention, at least one basic compound selected from the group consisting of alkali metal hydroxides and alkaline earth metal hydroxides is used. As already mentioned, basic compounds are used to induce a reaction that draws HF from polymers containing fluorine atoms.

Examples of the alkali metal hydroxide include lithium hydroxide, sodium hydroxide, potassium hydroxide, and cesium hydroxide. Among these preferred are sodium hydroxide and potassium hydroxide. Potassium hydroxide is known to be more active and basic than sodium hydroxide in concentrated solutions, and is expected to be highly active in the HF abstraction reaction. In fact, it has been confirmed in the present invention that potassium hydroxide is more active than sodium hydroxide in the decomposition of polymers containing fluorine atoms. From such a point of view, potassium hydroxide is the most preferable.

Examples of the alkaline earth metal hydroxides include calcium hydroxide and barium hydroxide.

The concentration of the basic compounds in water before raising the temperature for preparation of subcritical water ranges from about 0.5 M to 6.0 M. As is well known to those skilled in the art, the unit "M" represents mol/L. The concentration of the basic compound in the water before raising the temperature for preparation of subcritical water more preferably ranges from 1.0 M to 3.0 M, and even more preferably from 1.0 M to 2.0 M.

A method of decomposition will now be explained that involves bringing polymers containing fluorine atoms into contact with subcritical water containing a basic compound. Water, a basic compound, and a polymer containing fluorine atoms of interest are placed into a pressure vessel of a size appropriate for the amount of the polymer containing fluorine atoms of interest, and the interior of the pressure vessel is pressurized and sealed. To pressurize the interior of the pressure vessel, the vessel is filled with gas containing oxygen and is then sealed. Examples of the gas preferably include air and oxygen. Oxygen gas is more preferably used. Although a typical pressure of the vessel may be about 0.5 MPa, any other pressure is also available.

The pressure vessel that has undergone the above process is heated to initiate the decomposition reaction. The temperature of heating is usually 170 °C or higher. Preferred temperature is 200 °C or higher. From the viewpoint of eliminating solid residues in the reaction solution after the reaction is completed, the temperature of heating should be less than 300 °C, more preferably less than 250 °C. If the pressure vessel is equipped with heating means, then it can be heated using the heating means, otherwise the entire pressure vessel may be heated in an autoclave or oven. The reaction time may range from 6 to 24 hours.

After the reaction is completed, the fluorine atoms, having contained in the polymer containing fluorine atoms, are contained in the water as fluoride ions. Fluoride ions can react with calcium ions to be converted into calcium fluoride, which is a raw material for all types of fluorine compounds. Accordingly this method, involving treatment of wasted polymers containing fluorine atoms, can contribute to effective use of resources.

### <Apparatus of decomposing polymer containing fluorine atoms>

The apparatus capable of accomplishing the inventive method of decomposing a polymer containing fluorine atoms also lies within the scope of the present invention. This apparatus is characterized in that it is equipped with a reaction vessel for bringing a polymer containing fluorine atoms of interest into contact with subcritical water at 170 °C or higher under an oxygen-containing atmosphere in the presence of at least one basic compound selected from the group consisting of alkali metal hydroxides and alkaline earth metal hydroxides.

Water containing at least one basic compound selected from the group consisting of alkali metal hydroxides and alkaline earth metal hydroxides, and a polymer containing fluorine atoms of interest can be introduced into the interior of a pressure vessel, which can be heated under pressure. The gas used for pressurization is one that contains oxygen. Air or oxygen gas is preferably used as such a gas. The heating temperature is usually 170 °C or higher, preferably 200 °C or higher. The pressure vessel should be equipped with an agitator therein for stirring its contents. As other details have been described in the method of decomposing a polymer containing fluorine atoms, redundant description is omitted.

### Examples

The present invention will now be described in further detail by means of the following examples, which should not be construed to limit the scope of the invention in any way.

### [Inventive Examples]

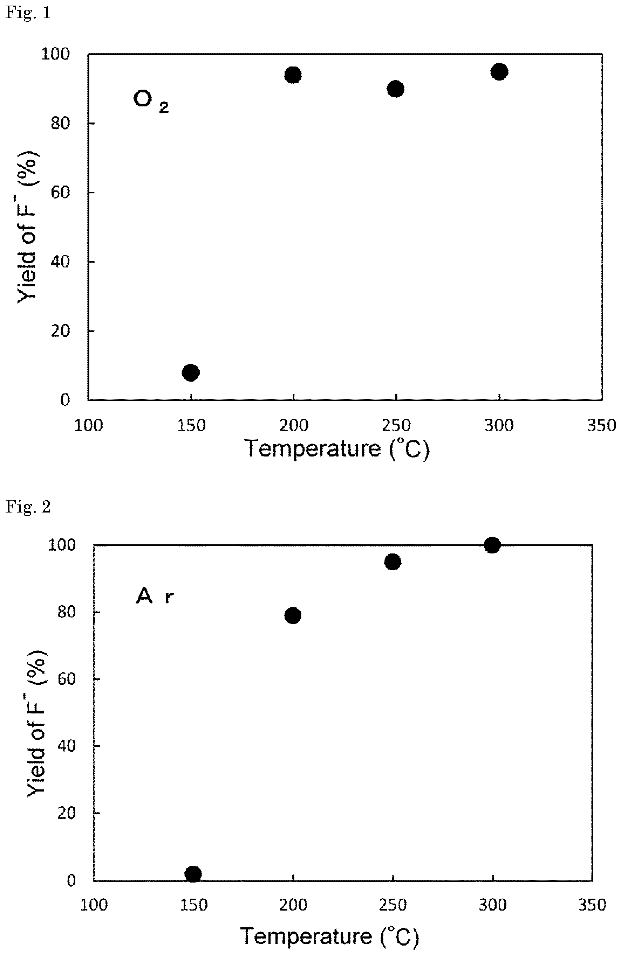

PVDF powder (30.0 mg) (polyvinylidene fluoride; 60.7 mass% fluorine atom content), which is a commercially available reagent, and 1.0 M sodium hydroxide solution (10 mL) were placed in a hot-water reactor, were pressurized with oxygen gas to 0.5 MPa, and were reacted at 150 °C, 200 °C, 250 °C, or 300 °C for 6 hours. The pressure during the reaction was 1.2 MPa (150 °C) to 9.1 MPa (300 °C). The amount of fluorine substance contained in 30.0 mg of PVDF powder is 959 µmol. After the reaction was completed, the contents were cooled to room temperature, and fluoride ions formed in the aqueous phase were determined by ion chromatography. The recovered amounts and yields of fluoride ions at each reaction temperature are shown in Table 1, and a plot of yields versus reaction temperature is shown in Figure 1. After the reaction was completed, unreacted PDVF was observed in the reaction solution reacted at 150 °C. The reaction solution reacted at 200 °C was clear and colorless, and no solid residue was observed in it. Black solid residues were observed in the reaction solution for the solution reacted at 250 °C or higher, but the amount was small. The solution reacted at 250 °C was clear and colorless, whereas the solution reacted at 300 °C had a light brown color.

**[Table 1]**

| | | | | |
|---|---|---|---|---|
| Temperature ( °C) | 150 | 200 | 250 | 300 |
| Recovered amount of F⁻ (µmol) | 72.0 | 903.1 | 865.9 | 906.2 |
| Yield of F⁻ (%) | 8 | 94 | 90 | 95 |

### [Comparative Examples]

The PVDF powder was decomposed as in Examples, except that argon gas was used for pressurization instead of oxygen gas. The recovered amounts and yields of fluoride ions at each reaction temperature are shown in Table 2, and a plot of yields versus reaction temperature is shown in Figure 2. The solution after the reaction was colored at all temperatures: The solution was light brown in color after the reaction at 150 °C, and this coloration became darker as the temperature increased, and the entire solution was black in color, like black ink at 300 °C. Unreacted PDVF was observed in the reaction solution at 150 °C, and black solid residue was observed in the reaction solution at 200 °C or higher.

**[Table 2]**

| | | | | |
|---|---|---|---|---|
| Temperature ( °C) | 150 | 200 | 250 | 300 |
| Recovered amount of F⁻ (µmol) | 22.8 | 754.2 | 913.4 | 958.4 |
| Yield of F⁻ (%) | 2 | 79 | 95 | 100 |

In comparison of Table 1 with Table 2 and Figure 1 with Figure 2, the yield of fluoride ions at 200 °C was more than 90% in the case where PVDF was contacted with subcritical water in an oxygen gas atmosphere, while the yield of fluoride ions at 200 °C was less than 80% in the comparative case where PVDF was contacted with argon gas atmosphere as in the invention described in PTL 2. The example reaction solution after the completion of the reaction carried out at 200 °C under an oxygen gas atmosphere was a uniform solution without any solid residue, and little solid residue was found even at higher temperatures. In contrast, the comparative example reaction solution after the completion of the reaction carried out under an argon gas atmosphere, much black solid residue was found. These results demonstrate that the method of decomposing a polymer containing fluorine atoms allows the decomposition reaction to proceed in higher yield at lower temperatures than the method described in PTL 2, and solid residues to be generated in significantly decreased amount..

## Claims

1. A method of decomposing a polymer containing fluorine atoms, comprising the step of:
bringing a polymer containing fluorine atoms of interest into contact with subcritical water at 170 °C or higher in the presence of at least one basic compound selected from the group consisting of alkali metal hydroxides and alkaline earth metal hydroxides,
wherein said step is performed in an atmosphere containing oxygen.

2. The method of decomposing a polymer containing fluorine atoms of claim 1, wherein the temperature of the subcritical water is 200 °C or higher.

3. The method of decomposing a polymer containing fluorine atoms of claim 1 or 2, wherein the basic compound is at least one selected from the group consisting of sodium hydroxide and potassium hydroxide.

4. An apparatus of decomposing a polymer containing fluorine atoms, comprising a reaction vessel for bringing a polymer containing fluorine atoms of interest into contact with subcritical water at 170 °C or higher in the presence of at least one basic compound selected from the group consisting of alkali metal hydroxides and alkaline earth metal hydroxides.
